# FASCICULE DE BREVET EUROPEEN

(11) **EP 3 260 957 B1**
(45) Date de publication et mention de la délivrance du brevet: **26.12.2018**
(21) Numéro de dépôt: 17176463.2
(22) Date de dépôt: 16.06.2017
(51) Int. Cl.: G06F 3/0354

(54) **DISPOSITIF DE REGLAGE DE L'EFFORT DE FREINAGE D'UNE BOULE DE COMMANDE OU " TRACKBALL " ET BOULE DE COMMANDE ASSOCIEE**
VORRICHTUNG ZUM REGULIEREN DER BREMSKRAFT EINES TRACKBALLS, UND ENTSPRECHENDER TRACKBALL
DEVICE FOR CONTROLLING THE BRAKING FORCE OF A TRACKBALL, AND ASSOCIATED TRACKBALL

(30) Priorité: 21.06.2016 FR 1600983
(43) Date de publication de la demande: 27.12.2017
(73) Titulaire: Thales, 92400 Courbevoie (FR)
(72) Inventeur: DANGLARD, Stéphane, 33700 MERIGNAC (FR); MOZER, Laurent, 33700 MERIGNAC (FR); MOREAUD, Erick, 33700 MERIGNAC (FR)
(74) Mandataire: Bréda, Jean-Marc

(56) Documents cités:
- EP-A1- 2 927 785
- US-A1- 2012 038 495

## Description

Le domaine général de l'invention est celui des boules de commande, connues aussi sous le nom de « trackballs ». Ces dispositifs sont utilisés pour commander un curseur graphique sur un ou des écrans de visualisation. On peut ainsi sélectionner et/ou modifier une unité de visualisation, une fenêtre d'affichage ou un paramètre affiché. Le domaine plus particulier de l'invention est celui des trackballs utilisés dans les cockpits d'aéronef.

Les cockpits d'aéronefs modernes comportent un système de visualisation comprenant plusieurs écrans d'affichage. La commande et la modification des informations affichées se fait au moyen de différents interfaces homme-machine. La trackball constitue une de ses interfaces. Elle est constituée principalement d'une boule de commande dont la partie supérieure est accessible à l'utilisateur. La partie inférieure repose sur des capteurs de mouvement qui peuvent être de différents types et qui détectent les rotations de la boule dans deux directions perpendiculaires. Les informations des capteurs permettent de déplacer un curseur graphique sur un écran de visualisation.

En application aéronautique, la boule de commande est soumise, pendant certaines phases de vol, à des vibrations ou à des accélérations qui peuvent être élevées. Aussi, il n'est pas possible de la laisser tourner librement. Elle doit être freinée pour empêcher tout mouvement parasite pendant ces phases critiques. Ce réglage est délicat dans la mesure où la boule doit être suffisamment freinée pour ne pas être sensible aux vibrations mais la rotation doit rester suffisamment souple pour qu'un utilisateur puisse tourner la boule sans effort important.

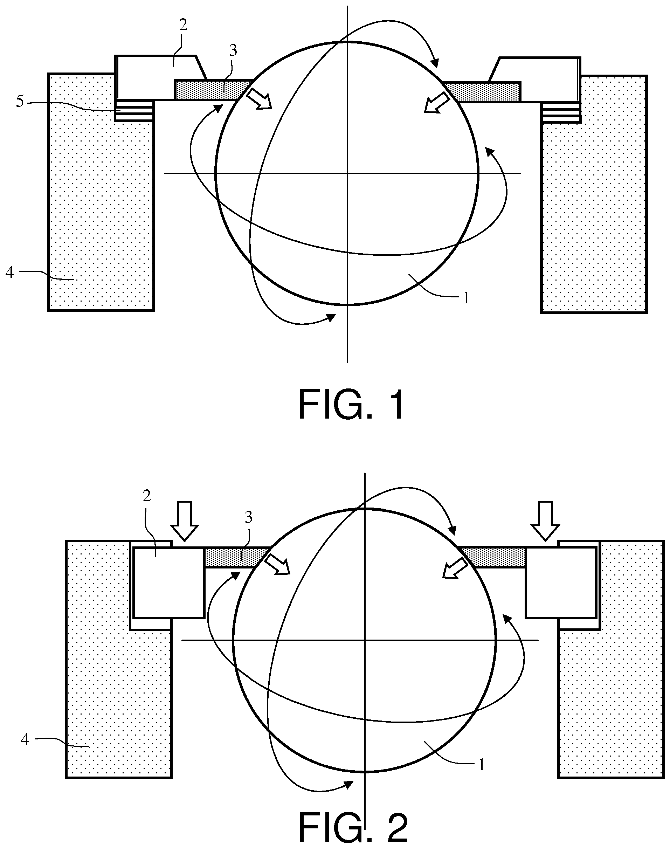

Actuellement, le réglage du frein est assuré par un montage représenté en figure 1. Une bague 2 comportant un joint souple 3 est fixée sur le corps 4 du dispositif qui comporte la boule de commande 1. Cette bague entoure la partie supérieure de la boule de commande. La force de freinage du joint souple est assurée par des cales 5 disposées entre la partie inférieure de la bague 2 et le corps 4. Elle est symbolisée par les deux flèches blanches inclinées de la figure 1. Cette solution présente deux inconvénients. Elle est complexe à mettre en oeuvre. Par ailleurs, en exploitation, les forces de freinage augmentent progressivement. Ce durcissement est dû à un encrassement des différents éléments mécaniques tels que les axes, les bagues, les roulements, lié à une utilisation intensive sur avion. A terme, la boule de commande doit être déposée, démontée et nettoyée. Des solutions voisines ont été proposées. Le document EP 2 927 785 propose ainsi un dispositif à boule de commande comportant une bague de frottement. Le document US 2012/0038495 décrit un dispositif à boule de commande comportant un dispositif de freinage asservi.

Le dispositif selon l'invention ne présente pas ces inconvénients. En effet, il permet d'effectuer facilement le réglage sans avoir à démonter ou à changer ou à nettoyer des pièces mécaniques. Plus précisément, l'invention a pour objet un dispositif à boule de commande ou « trackball » comportant une boule de commande et un dispositif de réglage de l'effort de freinage de la boule de commande, caractérisé en ce que ledit dispositif de réglage comporte :
- une bague tournante en forme de cylindre creux circulaire droit d'un diamètre intérieur supérieur à celui de la boule, ladite bague étant surmontée d'un joint annulaire de freinage souple de diamètre intérieur inférieur à celui de la boule et reposant sur celle-ci, la périphérie extérieure du cylindre comportant :
   - un premier oblong incliné d'un angle de quelques degrés par rapport à la base du cylindre ;
   - une première pluralité de crans identiques perpendiculaires à ladite base du cylindre, le diamètre intérieur du cylindre creux étant d'un diamètre supérieur à celui de la boule de commande et le diamètre intérieur du joint annulaire étant inférieur à celui de boule de commande ;
   - Un support fixe de ladite boule de commande comportant :
      - Un évidement circulaire de diamètre égal à celui de la périphérie extérieure du cylindre, la boule étant montée dans cet évidement;
      - un pion fixe et un doigt d'indexage agencés de façon que, la bague étant montée dans l'évidement du support fixe, le pion fixe se loge dans l'oblong de la bague et le doigt d'indexage dans un des crans de la bague, la rotation de la bague entraînant le déplacement du pion dans l'oblong, le changement de cran indexé et un mouvement de translation de la bague parallèlement à l'axe de révolution du cylindre.

Avantageusement, le cylindre creux de la bague comporte au moins un second oblong identique au premier oblong et une seconde pluralité de crans identique à la première pluralité de crans.

Avantageusement, la périphérie extérieure du cylindre comporte un levier de manoeuvre de la bague.

Avantageusement, le support fixe comporte des marquages permettant de repérer la position du levier de manoeuvre.

Avantageusement, la périphérie extérieure du cylindre comporte à l'entrée de l'oblong une fente permettant d'entrer la bague tournante dans le support.

Avantageusement, le support comporte des moyens d'obturation de la fente de façon à éviter tout retrait de la bague tournante montée dans son support.

L'invention sera mieux comprise et d'autres avantages apparaîtront à la lecture de la description qui va suivre donnée à titre non limitatif et grâce aux figures annexées parmi lesquelles :
La figure 1 représente le montage d'une boule de commande selon l'art antérieur ;
La figure 2 représente le principe technique du dispositif de réglage de l'effort de freinage d'une boule de commande selon l'invention ;
La figure 3 représente une vue de face éclatée d'un dispositif de réglage de l'effort de freinage d'une boule de commande selon l'invention ;
La figure 4 représente une vue en coupe de la bague tournante ;
La figure 5 représente une vue de face du dispositif de réglage précédent, une fois assemblé.

La figure 2 représente le principe technique du dispositif de réglage de l'effort de freinage d'une boule de commande selon l'invention. Pour obtenir l'effort souhaité sur la boule de commande, la bague 2 comportant le joint souple 3 n'est plus fixée sur le support mais est mécaniquement réglable en hauteur comme indiqué par les flèches doubles blanches de la figure 2. Ainsi, lorsque l'utilisateur élève la bague dans son support, la pression exercée par le joint sur la boule diminue et cette pression augmente dans le cas contraire. Cette disposition présente trois avantages principaux. Le premier est une réduction considérable du temps de réglage et d'assemblage de la trackball. Le second avantage est la possibilité d'ajuster l'effort de réglage sans démontage par l'utilisateur final. Enfin, on assure une plus grande durée de vie de la trackball dans la mesure où, lorsque la boule s'encrasse, on peut réduire l'effort nécessaire à la rotation par un simple déplacement de la bague.

Il existe différents moyens mécaniques permettant d'assurer la translation de la bague. Cependant, cette translation a un certain nombre de caractéristiques. Son amplitude est faible, de l'ordre du millimètre. On doit donc assurer le réglage avec une grande précision. La position de la bague doit également se conserver lorsque l'utilisateur fait tourner la boule de commande. Enfin, le réglage doit se faire simplement par l'utilisateur.

Le dispositif de réglage de l'effort de freinage d'une boule de commande selon l'invention remplit ces différents critères. La bague comporte des moyens mécaniques permettant de transformer sa rotation en un mouvement de translation de faible amplitude, la transformation étant assurée par un pion fixe coulissant dans un oblong mobile.

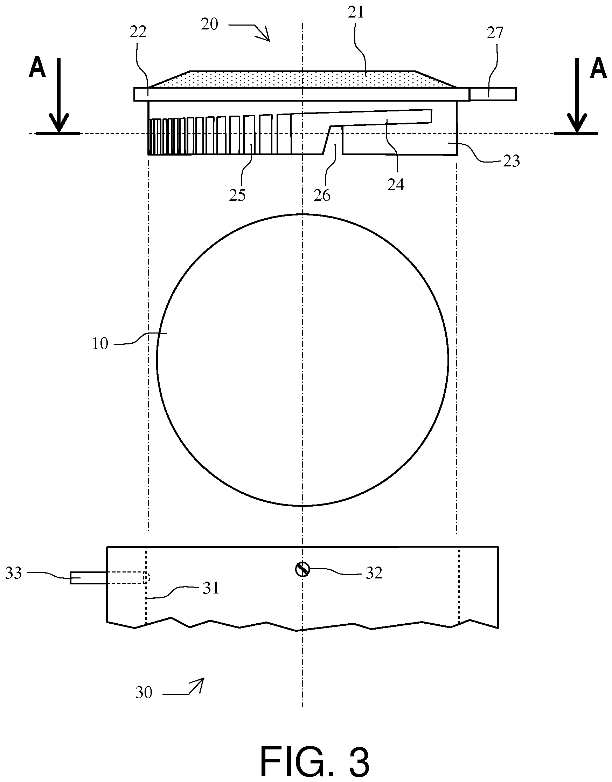

Ce dispositif est représenté sur la vue de face éclatée de la figure 3. Celle-ci comporte une bague tournante 20, une boule de commande 10 et un support 30 représenté en coupe partielle.

La bague tournante 20 est en forme de cylindre creux circulaire droit. La bague 20 est surmontée d'un joint 21 annulaire de freinage souple. Elle comporte un épaulement circulaire 22. Cet épaulement possède un levier de manoeuvre 27. La périphérie extérieure 23 du cylindre comporte :
- un premier oblong 24 incliné d'un angle de quelques degrés par rapport à la base du cylindre. Plus cet angle est faible, plus la rotation de la bague doit être importante pour provoquer son déplacement en rotation;
- une première pluralité de crans 25 identiques perpendiculaires à ladite base du cylindre.

Le diamètre intérieur du cylindre creux est d'un diamètre supérieur à celui de la boule de commande et le diamètre intérieur du joint annulaire est inférieur à celui de boule de commande. La périphérie extérieure du cylindre comporte à l'entrée de l'oblong 24 une fente ou échappatoire 26 permettant d'entrer la bague tournante dans le support 30. Cette fente peut comporter des moyens d'obturation afin d'éviter tout retrait involontaire de la bague dans son support.

Le support fixe 30 comporte :
- Un évidement circulaire 31 de diamètre égal à celui de la périphérie extérieure du cylindre ;
- un pion fixe 32 et un doigt d'indexage 33 ;
- des marquages permettant de repérer la position du levier de manoeuvre 27.

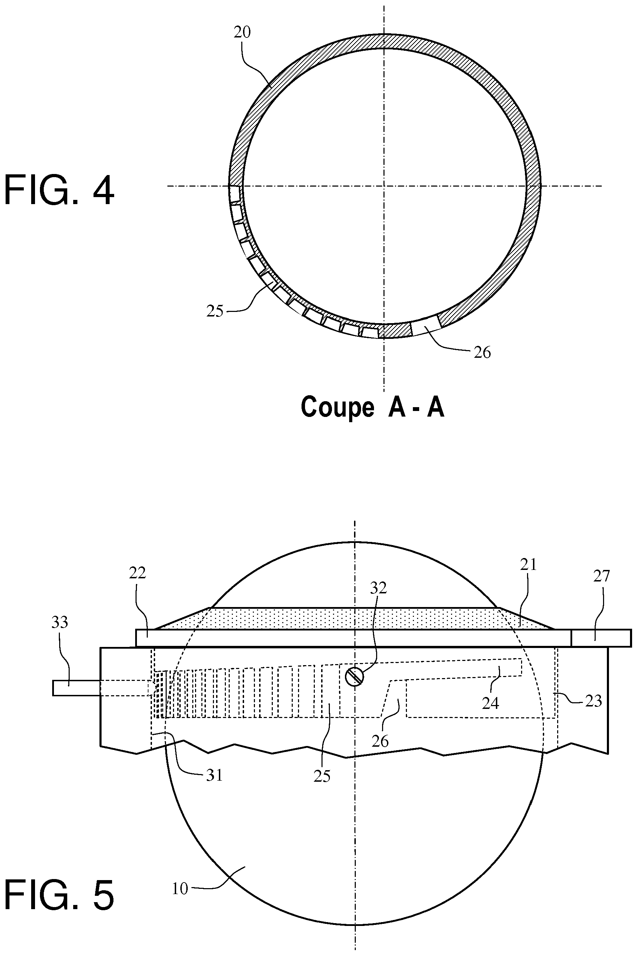

La figure 4 représente une vue en coupe de la bague tournante 20. Elle comporte les crans 25 et la fente 26. La forme des crans permet de régler la force nécessaire pour passer d'un cran à l'autre. Plus les crans sont profonds, plus le saut de cran nécessite une force importante. L'intervalle entre deux crans détermine la sensibilité du dispositif de réglage de l'effort de freinage. Le nombre de crans détermine le nombre de positions possibles de la bague et sa course en rotation.

La figure 5 représente la bague tournante 20 montée dans son support 30. La bague 20 est montée dans l'évidement 31 du support fixe et repose sur son épaulement 22. Le pion fixe 32 se loge dans l'oblong 24 de la bague et le doigt d'indexage 33 dans un des crans 25 de la bague.

La rotation de la bague est assurée par le levier de manoeuvre 27. Il entraîne le déplacement du pion 32 dans l'oblong 24, le changement de cran indexé et un mouvement de translation de la bague parallèlement à l'axe de révolution du cylindre. Le joint souple 21 qui repose sur la boule de commande 10 exerce alors une pression plus ou moins forte selon l'élévation de la bague 20.

Le cylindre creux de la bague peut comporter au moins un second oblong identique au premier oblong et une seconde pluralité de crans identique à la première pluralité de crans. Ce second ensemble oblong-crans étant disposé symétriquement par rapport au premier ensemble oblong-crans. On évite ainsi les effets d'arc-boutement de la bague dans son support.

La réalisation des différentes pièces mécaniques du dispositif ne pose pas de problèmes particuliers dans la mesure où elles ne nécessitent pas de haute précision de réalisation.

## Revendications

1. Dispositif à boule de commande ou « trackball » comportant une boule de commande et un dispositif de réglage de l'effort de freinage de la boule de commande, **caractérisé en ce que** ledit dispositif de réglage comporte :
- une bague tournante (20) en forme de cylindre creux circulaire droit d'un diamètre intérieur supérieur à celui de la boule, ladite bague étant surmontée d'un joint (21) annulaire de freinage souple de diamètre intérieur inférieur à celui de la boule et reposant sur celle-ci, la périphérie extérieure du cylindre comportant :
- un premier oblong (24) incliné d'un angle de quelques degrés par rapport à la base du cylindre ;
- une première pluralité de crans (25) identiques perpendiculaires à ladite base du cylindre, le diamètre intérieur du cylindre creux étant d'un diamètre supérieur à celui de la boule de commande et le diamètre intérieur du joint annulaire étant inférieur à celui de boule de commande ;
- Un support fixe (30) de ladite boule de commande comportant :
- Un évidement circulaire (31) de diamètre égal à celui de la périphérie extérieure du cylindre, la boule étant montée dans cet évidement;
- un pion fixe (32) et un doigt d'indexage (33) agencés de façon que, la bague étant montée dans l'évidement du support fixe, le pion fixe se loge dans l'oblong de la bague et le doigt d'indexage dans un des crans de la bague, la rotation de la bague entraînant le déplacement du pion dans l'oblong, le changement de cran indexé et un mouvement de translation de la bague parallèlement à l'axe de révolution du cylindre.

2. Dispositif à boule de commande selon la revendication 1, **caractérisé en ce que** le cylindre creux de la bague comporte au moins un second oblong identique au premier oblong et une seconde pluralité de crans identique à la première pluralité de crans.

3. Dispositif à boule de commande selon l'une des revendications précédentes, **caractérisé en ce que** la périphérie extérieure du cylindre comporte un levier de manoeuvre (27) de la bague (20).

4. Dispositif à boule de commande selon la revendication 3, **caractérisé en ce que** le support fixe comporte des marquages permettant de repérer la position du levier de manoeuvre.

5. Dispositif à boule de commande selon l'une des revendications précédentes, **caractérisé en ce que** la périphérie extérieure du cylindre comporte à l'entrée de l'oblong une fente (26) permettant d'entrer la bague tournante dans le support.

6. Dispositif à boule de commande selon la revendication 5, **caractérisé en ce que** le support comporte des moyens d'obturation de la fente de façon à éviter tout retrait de la bague tournante montée dans son support.

## Patentansprüche

1. Trackball-Vorrichtung, die einen Trackball und eine Vorrichtung zum Regeln der Bremskraft des Trackballs umfasst, **dadurch gekennzeichnet, dass** die Regelvorrichtung Folgendes umfasst:
- einen sich drehenden Ring (20) in Form eines geraden kreisförmigen Hohlzylinders mit einem Innendurchmesser, der größer ist als der des Balls, wobei der Ring von einer ringförmigen Weichbremsfuge (21) mit einem Innendurchmesser überlagert wird, der kleiner ist als der des Balls, und die darauf ruht, wobei die Außenperipherie des Zylinders Folgendes umfasst:
- eine erste Langform (24), die in einem Winkel von mehreren Grad in Bezug auf die Basis des Zylinders geneigt ist;
- eine erste Mehrzahl von identischen Kerben (25) lotrecht zur Basis des Zylinders, wobei der Innendurchmesser des Hohlzylinders einen Durchmesser hat, der größer ist als der des Trackballs, und der Innendurchmesser der ringförmigen Fuge kleiner ist als der des Trackballs;
- einen festen Träger (30) des Trackballs, der Folgendes umfasst:
- eine kreisförmige Aussparung (31) mit einem Durchmesser gleich dem der Außenperipherie des Zylinders, wobei der Ball in dieser Aussparung montiert ist;
- einen festen Pion (32) und einen Indexierfinger (33), so angeordnet, dass, wenn der Ring in der Aussparung des festen Trägers montiert ist, der feste Pion in der Langform des Rings aufgenommen wird und der Indexierfinger in einer der Kerben des Rings aufgenommen wird, wobei die Rotation des Rings die Bewegung des Pions in der Langform, die Änderung der indexierten Kerbe und eine Translationsbewegung des Rings parallel zur Umdrehungsachse des Zylinders bewirkt.

2. Trackball-Vorrichtung nach Anspruch 1, **dadurch gekennzeichnet, dass** der Hohlzylinder des Rings wenigstens eine zweite Langform identisch mit der ersten Langform und eine zweite Mehrzahl von Kerben identisch mit der ersten Mehrzahl von Kerben umfasst.

3. Trackball-Vorrichtung nach einem der vorherigen Ansprüche, **dadurch gekennzeichnet, dass** die Außenperipherie des Zylinders einen Manövrierhebel (27) des Rings (20) umfasst.

4. Trackball-Vorrichtung nach Anspruch 3, **dadurch gekennzeichnet, dass** der feste Träger Markierungen zum Ermitteln der Position des Manövrierhebels aufweist.

5. Trackball-Vorrichtung nach einem der vorherigen Ansprüche, **dadurch gekennzeichnet, dass** die Außenperipherie des Zylinders am Eingang der Langform einen Schlitz (26) aufweist, der das Einsetzen des sich drehenden Rings in den Träger zulässt.

6. Trackball-Vorrichtung nach Anspruch 5, **dadurch gekennzeichnet, dass** der Träger Mittel zum Verschließen des Schlitzes umfasst, um jedes Zurückziehen des sich drehenden Rings zu vermeiden, wenn er in seinem Träger montiert ist.

## Claims

1. Trackball device comprising a trackball and a device for adjusting the braking force of the trackball, **characterized in that** said adjusting device comprises:
- a rotating ring (20) in the form of a straight circular hollow cylinder having an inner diameter greater than that of the ball, said ring being topped by a flexible annular braking seal (21), having an inner diameter less than that of the ball, the seal resting on the ball, the outer periphery of the cylinder comprising:
- a first oblong (24) inclined by an angle of a few degrees in relation to the base of the cylinder;
- a first plurality of identical notches (25) at right angles to said base of the cylinder, the inner diameter of the hollow cylinder having a diameter greater than that of the trackball and the inner diameter of the annular seal being less than that of the trackball;
- a fixed support (30) of said trackball comprising:
- a circular void (31) with a diameter equal to that of the outer periphery of the cylinder, the ball being mounted in this void;
- a fixed pin (32) and an indexing finger (33) arranged so that, the ring being mounted in the void of the fixed support, the fixed pin is housed in the oblong of the ring and the indexing finger in one of the notches of the ring, the rotation of the ring causing the displacement of the pin in the oblong, the indexed notch to change and a translational motion of the ring parallel to the axis of revolution of the cylinder.

2. Trackball device according to Claim 1, **characterized in that** the hollow cylinder of the ring comprises at least one second oblong identical to the first oblong and a second plurality of notches identical to the first plurality of notches.

3. Trackball device according to one of the preceding claims, **characterized in that** the outer periphery of the cylinder comprises a manoeuvring lever (27) for manoeuvring the ring (20).

4. Trackball device according to Claim 3, **characterized in that** the fixed support comprises markings making it possible to identify the positon of the manoeuvring lever.

5. Trackball device according to one of the preceding claims, **characterized in that** the outer periphery of the cylinder comprises, at the entry of the oblong, a slit (26) making it possible to fit the rotating ring in the support.

6. Trackball device according to Claim 5, **characterized in that** the support comprises means for blocking the slit so as to avoid any removal of the rotating ring mounted in its support.
